Europäisches Patentamt

European Patent Office

Office européen des brevets

(19)

(11) Numéro de publication: **0 078 202**
**A2**

(12) # DEMANDE DE BREVET EUROPEEN

(21) Numéro de dépôt: **82401924.4**

(22) Date de dépôt: **20.10.82**

(51) Int. Cl.³: **E 04 D 5/12**

(30) Priorité: **26.10.81 FR 8120018**

(43) Date de publication de la demande:
**04.05.83 Bulletin 83/18**

(84) Etats contractants désignés:
**BE DE GB IT LU NL**

(71) Demandeur: **SIPLAST S.A. Société Anonyme dite**
**12, rue Cabanis**
**F-75014 Paris(FR)**

(72) Inventeur: **Meynard, Jean-Yves**
**La Baguerée du Cimetière Route de Cloyes**
**F-41170 Mondoubleau(FR)**

(74) Mandataire: **Blétry, Robert et al,**
**OFFICE BLETRY 2, Boulevard de Strasbourg**
**F-75010 Paris(FR)**

(54) **Mode d'assemblage d'éléments d'étanchéité bitumineux.**

(57) Les matériaux d'étanchéité bitumineux comprennent une partie apparente et une partie qui sert à leur assemblage pour constituer une membrane continue. La partie d'assemblage est une zone de jointoiement formée sur le bord dénudé d'un élément (1) sur laquelle s'applique en recouvrement le bord de l'élément adjacent (3). Pour assurer à cette zone la protection, lui conférer la résistance nécessaire et permettre le collage au bitume chaud, à la colle ou au chalumeau, on utilise un voile de fibres non tissées (2) poreuses et volatiles de faible poids noyé dans le liant de la zone de jointoiement.

*Fig.1*

1  0078202

Les matériaux d'étanchéité bitumineux sont composés en général de deux parties :

- une partie qui restera par la suite apparente,
- une partie qui sert à l'assemblage des éléments entre eux pour en faire une membrane continue de protection contre les entrées d'eau.

L'invention concerne la protection de la partie qui sert à l'assemblage des éléments entre eux.

La partie qui sert à jointoyer deux éléments distincts pour en faire un élément continu sera appelée zone de jointoiement dans ce qui suit.

Une zone de jointoiement a en général la même composition que le reste du matériau, sauf que l'on en a ôté tous les éléments qui, au regard du moyen de scellement envisagé, peuvent en gêner la mise en oeuvre et, le cas échéant, on y a apporté des éléments favorisant cette mise en oeuvre.

Par exemple, les matériaux d'étanchéité proposés en rouleaux, comprennent l'élément étanche lui-même, la protection de surface contre les agressions climatiques (UV, température, eau, etc...) et la zone de jointoiement formée sur le bord de l'élément étanche.

Le mode d'assemblage d'éléments d'étanchéité en matériaux bitumineux suivant l'invention est caractérisé en ce que sur le bord d'un élément, préférablement dénudé, constituant la zone de jointoiement est placée une feuille de fibre non tissée particulière sur laquelle s'applique par recouvrement le bord de l'élément adjacent.

La protection de surface apparaît alors continue.

Le scellement des deux éléments entre eux se fait par un moyen connu, comme le bitume chaud, la colle ou par fusion avec un chalumeau prévu à cet usage.

Toutefois cette zone de jointoiement, avant la mise en oeuvre, devra supporter le stockage en rouleau sans pour autant se coller entre spires.

Elle devra aussi se fabriquer économiquement; le prix des matériaux d'étanchéité étant faible, beaucoup des solutions employées dans l'industrie des adhésifs permanents (étiquettes et rubans par exemple) ne sont pas utilisables facilement.

Le problème qui se pose pour cette zone de jointoiement est : quel type de protection employer sur cette zone de jointoiement qui ne gêne pas le scellement final mais permette avant scellement de manipuler et stocker le rouleau d'étanchéité sans problème.

Enfin, la zone de jointoiement doit être suffisamment résistante à l'écrasement, car le rouleau de produit fini sera stocké sur le côté de la zone de jointoiement.

La plupart des solutions employées ne sont pas techniquement parfaites et/ou économiquement peu viables. On recense ainsi les protections suivantes :

- La silice en poudre ou d'autres minéraux en poudre comme le talc, l'ardoise, etc... Cette solution très économique n'est pas très performante sur le plan de la mise en oeuvre, le minéral faisant un écran. De plus l'aptitude au stockage n'est pas parfaite car des collages entre spires par temps chaud peuvent apparaître.

- Les films de polyoléfines. Cette solution est économique et présente une bonne protection contre le collage entre spires. Malheureusement le matériau ne peut se sceller qu'au chalumeau, mais pas au bitume chaud ou à la colle, ce qui restreint considérablement ses emplois.

- Les protections pelables, tels que le papier siliconé et assimilé. Cette solution est parfaite sur le plan protection, moins bonne sur le plan mise en oeuvre car elle oblige à enlever la protection et à la détruire. De plus elle n'est pas économique.

L'invention consiste en l'utilisation, en tant que protection de cette zone de jointoiement, d'un voile de fibre non tissée de poids très faible, perméable au bitume chaud et volatilisé au chalumeau.

Cette protection est déposée à la machine sur la partie du produit qui servira de zone de jointoiement, ou par tout autre moyen connu.

La fibre de non tissée sera préférentiellement de la fibre de polyester ou de polypropylène ou de tout autre polyoléfine.

Le voile aura un poids préférentiellement de 15 à 25 g au $m^2$ ou pourra descendre à 8-10 g et monter à 80 g.

Ce voile pourra être plus ou moins enfoncé dans le liant de la bande de soudure, l'essentiel est que la surface du voile affleure le liant de manière à jouer le rôle de protection. Cette utilisation d'une fibre de non tissée est très différente de leur utilisation habituelle en tant qu'armature de produit d'étanchéité.

Le non tissé pourra être également, de manière non limitative, composé de fibre de verre, de fibre d'alcool polyvinylique ou encore de fibre de polyamide et de manière générale de toute fibre capable de constituer un écran entre les bords superposés de deux éléments jointifs.

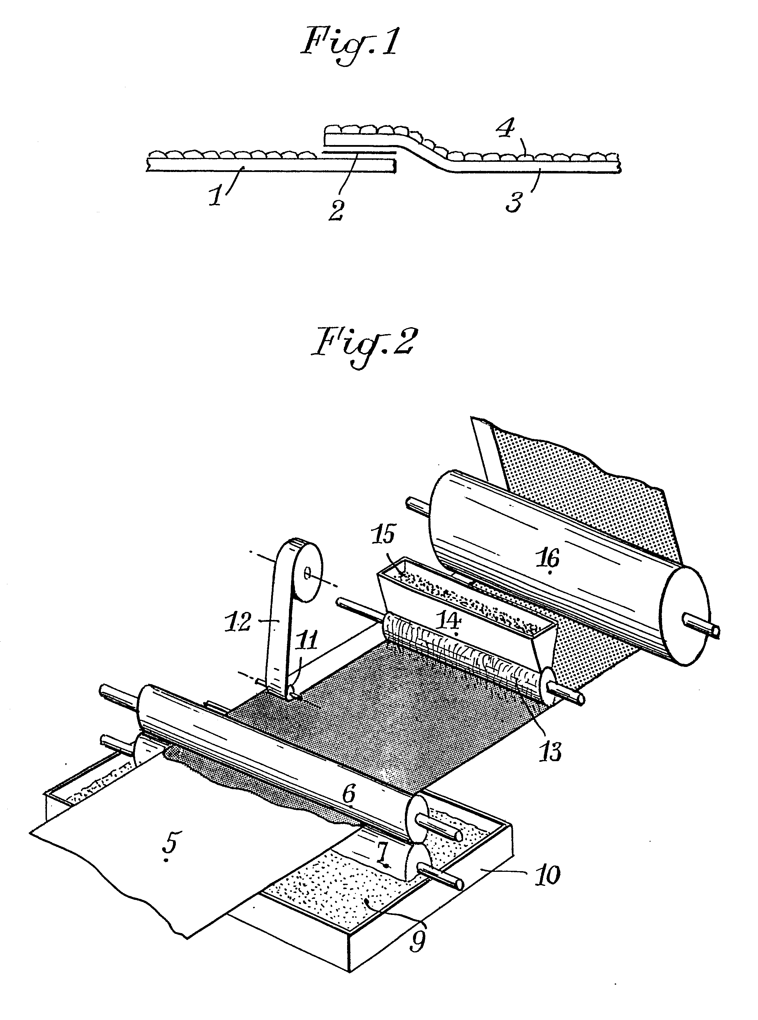

On a représenté en coupe à la figure 1 du dessin annexé, un assemblage d'éléments d'étanchéité bitumineux comprenant une zone de jointoiement suivant l'invention, ainsi que l'installation pour sa réalisation.

Sur le bord de l'élément étanche 1 est posée une bande de fibre de non tissée 2 plus ou moins enfoncée dans le liant qui assure son adhésion sous le bord de l'élément adjacent 3 recouvert du matériau de protection 4.

Une telle zone de jointoiement assure la protection contre le collage entre spires des rouleaux de matériau et confère à cette zone la résistance à l'écrasement dû au stockage. Elle permet d'obtenir un assemblage étanche avec le bord de l'élément adjacent posé sur elle du fait qu'elle est poreuse et volatile et laisse passer le bitume chaud, ou le bitume avec solvant, ou se volatilise par application du chalumeau.

La fabrication d'un tel élément de revêtement peut être réalisée par le procédé décrit ci-dessous en utilisant à cet effet l'installation représentée schématiquement à la figure 2.

Une armature appropriée 5, de la largeur désirée, est entraînée longitudinalement entre deux rouleaux 6 et 7, d'épandage du bitume, dont le rouleau inférieur 7 trempe partiellement dans un bain de bitume 9, contenu dans le bac 10; ensuite la face supérieure d'une des deux lisières de cette armature, complètement enrobée de bitume sur ses deux faces, est pourvue, au moyen du petit rouleau rotatif transversal 11, d'un ruban 12 de fibres non tissées; enfin un autre rouleau transversal 13, disposé sous une auge sans fond 14 remplie d'un matériau 15 de protection de la face supérieure de l'élément de revêtement, tel que des granulés par exemple, dépose sur toute la largeur de la face supérieure de l'élément d'étanchéité comprise entre la bande de tissu non tissé recouvrant une de ses lisières et son bord longitudinal opposé, une couche appropriée de ce matériau de protection; l'élément de revêtement d'étanchéité ainsi terminé, est entraîné longitudinalement par un autre rouleau longitudinal 16 et peut ensuite être utilisé ou stocké.

- REVENDICATIONS -

1.- Un élément de revêtement d'étanchéité constitué par une armature enrobée de bitume recouvert d'un matériau de protection, dont une lisière constitue une zone de jointoiement avec la lisière opposée d'un autre élément de revêtement semblable que l'on fait reposer sur ladite zone de jointoiement pour réaliser, avec un nombre approprié de ces éléments de la longueur adéquate, un revêtement étanche de la dimension désirée, caractérisé en ce que ladite zone de jointoiement est recouverte en usine d'un voile mince de fibres non tissées poreux et volatilisable.

2.- Un élément de recouvrement d'étanchéité suivant la revendication 1 caractérisé en ce que le voile de fibres non tissées pèse de 8 à 60 g, et préférablement de 15 à 25 g au $m^2$.

3.- Un élément de recouvrement d'étanchéité suivant la revendication 1 caractérisé en ce que le voile (2) est en fibres de verre.

4.- Un élément de recouvrement d'étanchéité suivant la revendication 1 caractérisé en ce que le voile (2) est en fibres d'alcool polyvinylique.

5.- Un élément de recouvrement d'étanchéité suivant la revendication 1 caractérisé en ce que le voile (2) est en fibres de la famille des polyamides.

6.- Un élément de recouvrement d'étanchéité suivant la revendication 1 caractérisé en ce que le voile (2) est en fibres de polyoléfine et en particules de polypropylène.

7.- Procédé de fabrication d'un élément de revêtement suivant l'une quelconque des revendications 1 à 6 dont l'armature est entraînée longitudinalement entre deux rouleaux rotatifs, transversaux, d'épandage de bitume d'enrobage caractérisé en ce qu'un petit rouleau transversal rotatif dépose, sur une lisière de la face supérieure de cette armature enrobée de bitume, une bande de fibres non tissées et en ce que la finition du produit se poursuit de manière conventionnelle.

8.- Assemblage d'éléments de revêtement pour constituer une membrane continue d'étanchéité de couverture, caractérisé en ce qu'il est constitué par la soudure bord à bord d'éléments suivant la revendication 1 par les procédés connus de scellement au bitume chaud, à la colle avec solvant ou au chalumeau.

Fig.1

Fig.2